# EUROPÄISCHE PATENTSCHRIFT

(11) **EP 1 930 188 B1**
(45) Veröffentlichungstag und Bekanntmachung des Hinweises auf die Patenterteilung: **25.11.2009**
(21) Anmeldenummer: 07115774.7
(22) Anmeldetag: 06.09.2007
(51) Int. Cl.: B60C 23/00, A01D 41/02

(54) **Druckluftsystem für ein Fahrzeug**
Compressed air system for a vehicle
Système d'air comprimé pour un véhicule

(30) Priorität: 06.12.2006 DE 102006057791
(43) Veröffentlichungstag der Anmeldung: 11.06.2008
(73) Patentinhaber: CLAAS Selbstfahrende Erntemaschinen GmbH, 33428 Harsewinkel (DE)
(72) Erfinder: Diekhans, Norbert, Dr., 33335, Gütersloh (DE); Strotmann, Georg, 33442, Herzebrock-Clarholz (DE)

(56) Entgegenhaltungen:
- EP-A- 0 457 028
- EP-A- 1 425 952
- EP-A- 1 493 599
- US-A1- 2004 244 896

## Beschreibung

Die vorliegende Erfindung bezieht sich allgemein auf das Gebiet der Landwirtschaft und der Verarbeitung von Ernteerzeugnissen. Hierzu werden Fahrzeuge, insbesondere selbstfahrende Landmaschinen, welche zur Aufnahme der Ernte und zur Verarbeitung des Gutes dienen, eingesetzt. Bei den selbstfahrenden Landmaschinen handelt es sich in der Regel um Dreschmaschinen, insbesondere Mähdrescher und Feldhäcksler, die mit Antriebseinrichtungen und Vorrichtungen für den Fahrbetrieb und das Erntegut verarbeitenden Aggregaten ausgestattet sind.

Um den Fahrbetrieb einer selbstfahrenden Landmaschine zu optimieren, steht eine Druckluftversorgung für eine Reifendruckeinstelleinrichtung zur Verfügung, Die EP 1 493 599 A2 schlägt dazu ein Verfahren und eine Vorrichtung zur automatischen Reifendruckregelung vor, bei der die Regelung des Reifendrucks in Abhängigkeit von spezifischen Zustandsgrößen erfolgt, die sich stetig und systematisch ändern und die zugleich das Fahrverhalten, wie etwa auf unbefestigten Untergrund, beeinflussen, Das Verfahren und die Vorrichtung weisen daher Sensoren auf, deren erzeugte Signale in einer Rechnereinheit verarbeitet und anschließend einer Steuereinheit zur Steuerung des Reifendruckes übermittelt werden, sodass der Reifendruck, kontinuierlich in Abhängigkeit von der Fahrzeugmasse, veränderbar ist.

Die Merkmale des Oberbegriffs gemäß Anspruch 1 der zugrunde liegenden Anmeldung lassen sich dieser Druckschrift entnehmen.

Eine weitere Vorrichtung sowie ein Verfahren zur Einstellung des Reifendruckes im Fahrbetrieb eines Fahrzeuges offenbart die DE 198 04 249 A1, Hierbei handelt es sich um eine Druckvorrichtung zur Einstellung des Druckes in wenigstens einem Reifen eines Fahrzeuges mit einer pneumatischen Steuerungseinheit, wobei die Vorrichtung mit einer Druckluftquelle verbunden ist.

Das in den beiden vorgenannten Offenlegungsschriften aufgezeigte System zur Regulierung des Reifendrucks während des Fahrbetriebes von selbstfahrenden Landmaschinen weist den Nachteil auf, dass das dargestellte System, für den optimalen Fahrbetrieb eines Fahrzeuges, nur zur Regulierung des Reifendrucks eingesetzt werden kann und die überschüssige Luft aus einer Druckluftquelle oder aus einem oder mehreren Reifen einfach über Ventile ausgeblasen wird,

Die selbstfahrenden Landmaschinen sind mit einem weiteren Druckluftsystem zur Reinigung der das Erntegut verarbeitenden Aggregate und Maschinenteile mit einer Reinigungseinrichtung ausgestattet. Eine solche Reinigungseinrichtung zur Reinigung eines Vorratsbehälters einer Erntemaschine, insbesondere eines Mähdreschers ist in der EP 1 425 952 A1 offenbart. Das Reinigungssystem umfasst eine Quelle für ein unter Druck stehendes Reinigungsmedium, bei dem es sich um Luft, ein anderes Gas oder eine Reinigungsflüssigkeit, wie Wasser oder Seifenwasser, handeln kann. Des weiteren umfasst das Reinigungssystem Düsen, die über Leitungen mit der Quelle in Verbindung stehen. Die Düsen lassen das Reinigungsmedium an der Innenseite des Vorratsbehälters aus, um diesen zu Reinigen. Durch Bereitstellen von strategisch angebrachten Düsen und zugeordneten Absperrventilen, kann ein effektives Reinigen von Flächen ohne manuelles Reinigen erzielt werden, wodurch die Zeit zum Reinigen der Erntemaschine beträchtlich vermindert wird. Das Reinigungssystem besteht daher aus einem unter Druck stehenden Reinigungsmedium in einem Leitungsnetzwerk, wobei der Druck durch eine Luftquelle erzeugt wird.

Der Nachteil dieser Reinigungseinrichtung besteht darin, dass das Reinigungssystem nur zur Reinigung der Aggregate einer selbstfahrenden Landmaschine eingesetzt werden kann.

Der Erfindung liegt daher die Aufgabe zugrunde, eine Vorrichtung bzw. ein Druckluftsystem der eingangs genannten Art zu schaffen, welche die genannten Nachteile der aus dem Stand der Technik bekannten Anordnungen vermeidet und eine technische Lösung anzugeben, die es ermöglicht, eine kostengünstigere und mit einfacher Funktionsgeometrie ausgestattete Vorrichtung bereitzustellen,

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Um ein mit den Merkmalen der vorliegenden Erfindung ausgestattetes Versorgungssystem, vorzugsweise ein Druckluftsystem, bestehend aus einer Vorrichtung zur automatischen Druckregelung von gasgefüllten Reifen bzw. zur automatischen Reifendruckregulierung eines Fahrzeuges und zum automatischen Reinigen von Aggregaten und Maschinenteilen eines Fahrzeuges, insbesondere einer selbstfahrenden Landmaschine, zu schaffen, wird erfindungsgemäß vorgeschlagen, eine landwirtschaftliche Arbeitsmaschine, insbesondere Mähdrescher oder Feldhäcksler, mit einer Vielzahl von Arbeitsaggregaten zur Bearbeitung von Erntegutströmen und einer Vielzahl von Maschinenteilen und einer den gasgefüllten Reifen zugeordneten Reifendruckeinstelleinrichtung so auszugestalten, dass die Reifendruckeinstelleinrichtung und eine ihr zugeordnete Druckquelle über ein Leitungssystem gekoppelt sind und wobei in das Leitungssystem eine Reinigungseinrichtung integriert ist. Auf diese Weise wird eine technische Lösung angegeben, die es ermöglicht, eine kostengünstigere und mit einfacher Funktionsgeometrie ausgestattete Vorrichtung bereitzustellen.

In einer vorteilhaften Ausgestaltung der Erfindung umfasst die erfindungsgemäße Reifendruckeinstellvorrichtung eine Reifendruckregelanlage, einer Rechnereinheit mit angeschlossenen Sensoren und ein Bedienfeld, wobei die Reifendruckregelanlage von einer Steuereinheit und Ventilen gebildet wird. Eine derartige Struktur hat insbesondere den Vorteil, dass die Reifendruckeinstellvorrichtung sehr flexibel mit weiteren, Druckluft nutzenden Systemen kombinierbar ist ohne das für die Integration dieser weiteren Systeme umfangreiche konstruktive Änderungen an dem Druckluftversorgungssystem erforderlich sind.

Indem in einer vorteilhaften Weiterbildung der Erfindung vorgesehen ist, dass die Reinigungseinrichtung aus einer Rechnereinheit mit angeschlossenen Wärmesensoren, einem Bedienfeld, einer Steuereinheit und Ventilen besteht, wobei die Rechnereinheit und die Steuereinheit gemeinsam von der Reifendruckeinstelleinrichtung und der Reinigungseinrichtung genutzt werden ist sichergestellt, dass ohne signifikanten Umbauaufwand die Reinigungseinrichtung und die Reifendruckregeleinrichtung in einem gemeinsamen Druckluftversorgungssystem betrieben werden können.

Zudem ist in einer vorteilhaften Ausgestaltung der Erfindung vorgesehen, dass die Reifendruckeinstelleinrichtung und die Reinigungseinrichtung von der gleichen Druckluftquelle versorgt werden, Dies hat den Vorteil, dass sich der Umfang an erforderlichen Bauteilen reduziert, da beide Einrichtungen in ein und dasselbe Druckluftversorgungssystem integriert werden,

In einer weiteren vorteilhaften Ausgestaltung der Erfindung wird die Druckluftquelle mit den Elementen der Vorrichtung einerseits zur Steuerung des Reifendrucks und andererseits zur Reinigung der Aggregate und Maschinenteile eingesetzt. Auf diese Weise wird ein multifunktionaler Einsatz eines Druckluftversorgungssystems auf einer selbstfahrenden Landmaschine erreicht.

Indem die Arbeitsaggregate und die Maschinenteile der selbstfahrenden Landmaschine mit Reinigungsdüsen ausgestattet sind und die Druckluftquelle über Ventile und Zuleitungen mit den Reinigungsdüsen verbunden ist, wird sichergestellt, dass den zu reinigenden Arbeitsaggregaten und Maschinenteilen definiert und präzise ein Druckluftstrom zur Verfügung gestellt werden kann. Vorteilhafterweise werden die Ventile der Reifendruckregelanlage dafür benutzt, Der von der Druckluftquelle für den Radreifen erzeugte Luftdruck wird während des Fahrbetriebes stetig und systematisch den Einsatzbedingungen der selbstfahrenden Landmaschine angepasst. Bei der automatischen Anpassung der Druckregelung, die in Abhängigkeit spezifischer Zustandsgrößen erfolgt, wurde bisher die bei der Druckerhöhung im Radreifen überschüssige Druckluft, über ein Ventil direkt an der Druckluftquelle oder über ein Ventil am Radreifen bzw. mehrerer Ventile an den Radreifen einfach ausgeblasen. Auch bei der Luftdruckreduzierung im Radreifen wurde die überschüssige Druckluft über ein Ventil, welches über die Reifendruckregelanlage gesteuert wird, ausgeblasen. Erfindungsgemäß befinden sich jetzt an den Ausblasöffnungen der Ventile Zuleitungen, Die Zuleitungen stellen die Verbindungen zu den Reinigungsdüsen her.

Weiter sind die Reinigungsdüsen an Aggregaten und Maschinenteilen angeordnet, vorteilhafterweise an brandgefährdeten und/oder sauber zuhaltenden Stellen. Besonders die Stellen im Motorraum und/oder in der Nähe der Abgasanlage werden so von Verunreinigungen, dem so genannten Kaff, freigehalten, Besonders wichtig ist es, auch die Stellen an den Kupplungsteilen, von Ablagerungen freizuhalten, Die Kupplungsteile bei den selbstfahrenden Landmaschinen mussten bisher vom Maschinenführer vor dem Ab- und Ankuppeln von Hand gesäubert werden, weil die Ablagerungen in den Passführungen der Kupplungsteile den Kuppelvorgang beeinträchtigen. Das erfindungsgemäße automatische Freiblasen der Kupplungsteile erleichtert wesentlich die Tätigkeit des Maschinenführers,

Die Antriebseinrichtung für den Fahrbetrieb ist mit einem Kühlsystem ausgestattet. Das Kühlsystem enthält einen oder mehrere Kühler für Wasser und Öl. Der Kühler kann ebenfalls mit Reinigungsdüsen versehen sein, die ein teilweises Freiblasen des Kühlers von Ablagerungen erreichen, Das Freiblasen des Kühlers kann, beispielsweise während des Fahrbetriebes, automatisch durch die Reinigungseinrichtung oder durch Betätigung des Bedienfeldes über die Reinigungseinrichtung erfolgen. Über das Bedienfeld besteht des weiteren die Möglichkeit, bei Stillstand der selbstfahrenden Landmaschine vorübergehend zum Frei- oder Ausblasen der Aggregate und Maschinenteile, die in den Radreifen gespeicherte Druckluft für den Reinigungsvorgang zu nutzen. Beim Start der Antriebseinheit der selbstfahrenden Landmaschine würde zuerst über die Reifendruckeinstelleinrichtung der für den Fahrbetrieb benötigte Druck für die Radreifen wieder hergestellt.

Ein Ausführungsbeispiel der Erfindung ist in den Zeichnungen rein schematisch dargestellt und wird nachfolgend naher beschrieben. Es zeigt:
- Fig. 1: eine Seitenansicht einer selbstfahrenden Landmaschine mit einer darin enthaltenen erfindungsgemäßen Vorrichtung zur Steuerung des Reifendruckes und zur Reinigung von Aggregaten und Maschinenteilen und
- Fig. 2: ein Diagramm einer erfindungsgemäßen Vorrichtung, bestehend aus den Komponenten einer Reifendruckeinstelleinrichtung, Reinigungseinrichtung und einer Druckluftquelle.

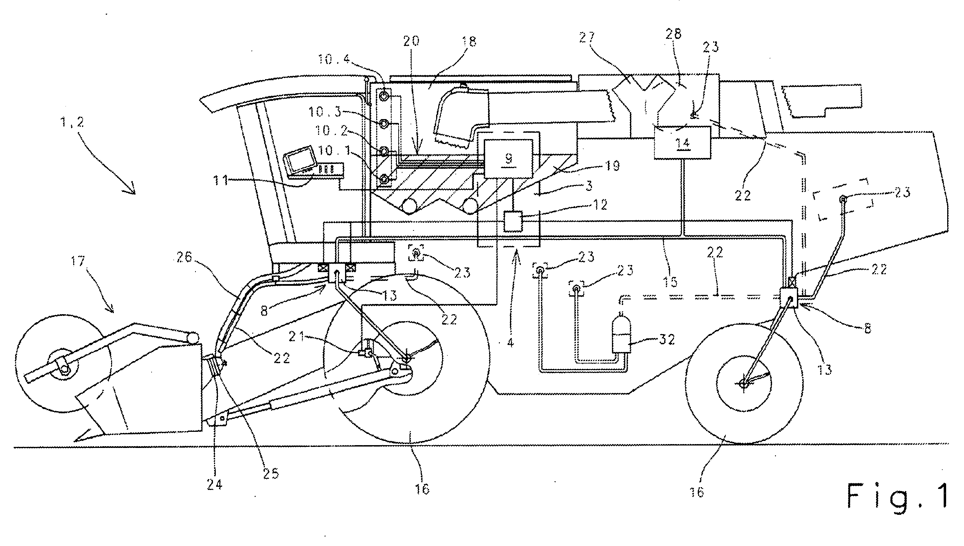

Gemäß der Fig.1 bezieht sich die erfindungsgemäße Vorrichtung 3 auf ein Fahrzeug, insbesondere auf eine selbstfahrende Landmaschine 1, wobei die selbstfahrende Landmaschine 1, gemäß dem Beispiel der Fig. 1, als an sich bekannter Mähdrescher 2 ausgeführt ist. Der Mähdrescher 2 ist zum optimalen Fahrbetrieb mit einer noch näher zu beschreibenden Reifendruckeinstelleinrichtung 4 und zur Reinigung noch näher zu beschreibender Arbeitsaggregate 5 und Maschinenteile 6 mit einer in die erfindungsgemäße Vorrichtung 3 der Reifendruckeinstelleinrichtung 4 integrierten Reinigungseinrichtung 7 ausgestattet.

Die Reifendruckeinstelleinrichtung 4 besteht aus einer Reifendruckregelanlage 8, einer Rechnereinheit 9 mit angeschlossenen Sensoren 10 und einem Bedienfeld 11, wobei die Reifendruckregelanlage 8 eine Steuereinheit 12, Ventile 13 und eine Druckluftquelle 14 umfasst. Die Druckluftquelle 14 ist über Zuleitungen 15 mit den Radreifen 16 verbunden ist, Die Zuleitungen 15 enthalten verstellbare Ventile 13, die ein kontrolliertes Befüllen und Entleeren der Radreifen 16, bzw, ein Halten des Reifendruckes ermöglichen. Die Ventile 13 sind an die Steuereinheit 12 angeschlossen, welche die Stellung der Ventile 13 regelt. Mit Hilfe der Steuereinheit 12 wird der Reifendruck in Abhängigkeit von der Maschinenmasse des Mähdreschers 2 geregelt. Die Daten der Maschinenmasse ergeben sich beispielsweise aus den verwendeten Radreifen 16, der Masse und Position des angebauten Vorsatzgerät 17 und dem im Korntank 18 befindlichen Erntegut 19, wobei die Füllstandshöhe 20 im Korntank 18 variabel ist, Die Füllstandshöhe 20 des Erntegutes 19 wird durch Füllstandssensoren 10.1 bis 10.4, die mit der Rechnereinheit 9 verbunden sind, erfasst und gehen in die laufenden Berechnungen der Maschinenmasse ein. Die Rechnereinheit 9 ist mit der in der Reifendruckregelanlage 8 enthaltenen Steuereinheit 12 verbunden, die den Reifendruck in Abhängigkeit von dem berechneten Maschinenmassewert ändert, Die Gewichtsbelastung kann auch per Drucksensoren 21, die beispielsweise an den Achsaufhängungen etc. angebracht und mit der Rechnereinheit 9 verbunden sind, völlig automatisch ermittelt werden. Weitere Details zur Steuerung des Reifendrucks können der Offenbarung der EP 1 493 599 A2 entnommen werden,

Die Reinigungseinrichtung 7 besteht in einer ersten Ausführungsform, wie in Fig. 1 dargestellt, aus den in der Reifendruckregelanlage 8 angeordneten Ventilen 13, einer Druckluftquelle 14, wobei die Druckluftquelle 14, vorzugsweise ein Kompressor, über die Zuleitungen 15, die Ventile 13 und weitere Zuleitungen 22 mit den Reinigungsdüsen 23 verbunden ist. Die Reinigungsdüsen 23 sind im Bereich der bereits erwähnten und im folgenden näher beschriebenen Arbeitsaggregate 5 und Maschinenteile 6 angeordnet. Im frontseitigen Bereich nimmt die als Mähdrescher 2 ausgeführte landwirtschaftliche Arbeitsmaschine 1, wie bereits beschrieben, ein Vorsatzgerät 17 zum Schneiden, Aufnehmen und Fördern von Erntegut auf. Zur Versorgung mit Antriebsenergie verfügt das Vorsatzgerät 17 in seinem rückwärtigen Bereich über einen Adapter 24, der mit einem der landwirtschaftlichen Arbeitsmaschine 1 zugeordneten Steckverbinder 25 über eine Schlauchleitung 26 koppelbar ist und wobei der Steckverbinder 25 und der Adapter 24 nicht näher dargestellte Leitungsanschlüsse zur Weiterleitung von Hydraulikmedien und Luft sowie elektrische Anschlüsse umfassen kann. Zugleich ist dem Steckverbinder 25 eine der erfindungsgemäßen Zuleitungen 22 zugeordnet, über welche Druckluft zur Reinigung des Steckverbinders 25 und des Adapters 24 geführt werden kann, Indem die Zuleitung 22 steckverbinderseitig über Reinigungsdüsen 23 verfügt, können Steckverbinder 25 und Adapter 24 mittels eines Druckluftstromes gereinigt werden, wobei der Steckverbinder 25 und der Adapter 24 zugleich die Maschinenteile 6 bilden. Eine solche Ausführung hat insbesondere den Vorteil, dass die verschiedenen Leitungsanschlüsse nicht durch Schmutzpartikel blockiert werden oder Verunreinigungen in den Hydraulik- oder Luftkreislauf der landwirtschaftlichen Arbeitsmaschine 1 und des Vorsatzgerätes 17 gelangen, Je nach Gestaltung der Reinigungseinrichtung 7 kann der Druckluftstrom entweder aus der abgeblasenen Druckluft der Reifendruckregelanlage 8 oder der von der Druckluftquelle 14 generierten sogenannten Kompressorabluft generiert werden.

Weiter kann die erfindungsgemäße Reinigungseinrichtung 7 gemäß Figur 1 Zuleitungen 22 zu dem Antriebsmotor 27 und/oder einem der Luftansaugung des Antriebsmotors 27 zugeordneten Ansaugluftfilters 28, der in der Regel als an sich bekannter sogenannter Korbfilter ausgebildet ist, umfassen. In analoger Weise sind diesen Zuleitungen 22 ebenfalls Reinigungsdüsen 23 zugeordnet, über die ein entweder aus der abgeblasenen Druckluft der Reifendruckregelanlage 8 oder der von der Druckluftquelle 14 generierten sogenannten Kompressorabluft generierter Druckluftstrom zur Reinigung des Antriebsmotors 27 oder des Ansaugluftfilters 28 bereitgestellt wird. In diesem Fall bilden der Antriebsmotor 27 und der Ansaugluftfilter 28 die erfindungsgemäßen Arbeitsaggregate 5 der landwirtschaftlichen Arbeitsmaschine 1.

Zugleich liegt es im Rahmen der Erfindung, dass der von beliebig an und in der landwirtschaftlichen Arbeitsmaschine 1 angeordneten Reinigungsdüsen 23 abblasbare Druckluftstrom auch zur Kühlung diverser Arbeitsorgane 5 und Maschinenteile 6 einsetzbar ist. In diesem Zusammenhang wäre es beispielsweise denkbar, dass die verschiedenen Antriebssysteme der landwirtschaftlichen Arbeitsmaschine 1, wie etwa Riementriebe, durch regelmäßiges Abblasen mit Druckluft in der zuvor beschriebenen Weise gekühlt werden. Ein solches Abblasen wird dann auf besonders komfortable Weise erreicht, wenn den diversen Antriebssystemen in noch näher zu beschreibender Weise Wärmesensoren 29 zugeordnet sind, die die Abgabe von Druckluft zur Kühlung der verschiedenen Antriebssysteme steuern.

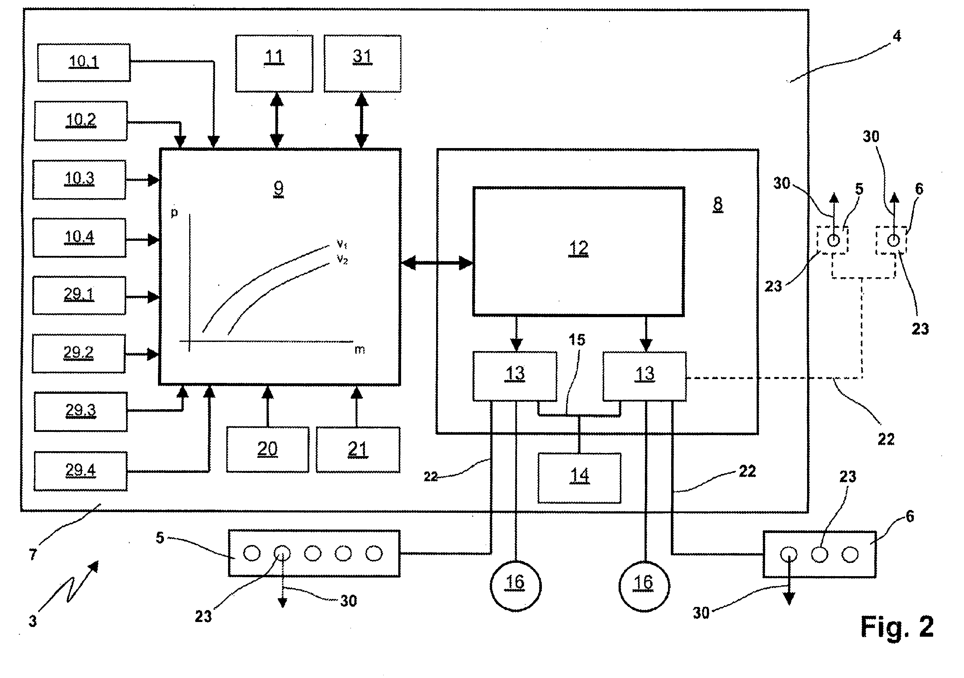

Gemäß der Prinzipdarstellung nach Figur 2 wird in einer weiteren Ausführung die Abgabe des Reinigungsmediums 30 an den Reinigungsdüsen 23 der Arbeitsaggregate 5 und der Maschinenteile 6 der Reinigungseinrichtung 7 über die im Speicher 31 der Rechnereinheit 9 hinterlegten Daten, die der Steuereinheit 12 zur Regelung der Ventile 13 zugeführt werden, automatisch geregelt. Zusätzlich kann über das Bedienfeld 11 die Reinigungseinrichtung 7 vom Maschinenführer manuell bedient werden, In einer anderen Ausführung sind zur Regelung der Reinigungsdüsen 23 Sensoren 29, vorzugsweise Wärmesensoren, an die Rechnereinheit 9 angeschlossen. Die Wärmesensoren 29.1 bis 29.4 sind vorzugsweise an besonders Hitze gefährdeten Stellen im Motorraum oder in der Nähe der Abgasanlage angeordnet und/oder gemäß den vorherigen Ausführungen im Bereich ausgewählter Antriebssysteme der landwirtschaftlichen Arbeitsmaschine 1 angeordnet.

Auch eine Kombination der Reinigungseinrichtung 7 aus den vorgenannten Ausführungen ist möglich. Mit den vorgenannten Ausführungen der Reinigungseinrichtung 7 wird unmittelbar die von der Druckluftquelle 14 erzeugte Druckluft zur Reinigung von Arbeitsaggregaten 5 und Maschinenteilen 6 eingesetzt. Nachstehende Ausführungen zur Reinigungseinrichtung 7 sind in der Fig.1 nur gestrichelt dargestellt. Die von der Druckluftquelle 14 erzeugte Druckluft kann auch nach den Ventilen 13 über Zuleitungen 22 einem Behälter 32, der mit einem Reinigungsmedium 30 aus Flüssigkeit gefüllt ist, zugeführt werden. Der Behälter 32 ist mit weiteren Zuleitungen für den Transport der Flüssigkeit zu den an den Aggregaten 5 und Maschinenteilen 6 angeordneten Reinigungsdüsen 23 verbunden, Der Behälter 32 für das flüssige Reinigungsmedium 30 kann auch mit der Druckluftquelle 14 direkt (in der Fig.1 nicht dargestellt) verbunden sein, von dem aus die Verteilung des unter Druck stehenden Reinigungsmediums 30 über ein Leitungsnetzwerk zu den Reinigungsdüsen 23 erfolgt. Durch eine Anordnung von strategisch angebrachten Reinigungsdüsen 23 und zugeordneten Absperrventilen, wobei die Ventile zwischen der Druckluftquelle 14 und den Reinigungsdüsen 23 angeordnet sein können, kann ein effektives Reinigen von Aggregaten 5 und Maschinenteilen 6 erfolgen, Obwohl nur einige Zuleitungen 22 und Reinigungsdüsen. 23 in der Fig. 1 gezeigt werden, kann das Leitungsnetzwerk aus vielen über den Mähdrescher 2 verteilten Zuleitungen 22 bestehen. Die Zuleitungen 22 können ebenfalls mit Ventilen (nicht dargestellt) die an der Vorrichtung 3 angeschlossen sind, ausgestattet sein. Weitere Ausführungen, zu der in einer Vorrichtung 3 kombinierten Reifendruckeinstelleinrichtung 4 und/oder einer Reinigungseinrichtung 7 sind der Fig. 2 zu entnehmen.

Die Fig.2 zeigt ein vereinheitlichtes Versorgungssystem bestehend aus einer Vorrichtung 3, wobei die Vorrichtung 3 eine konkrete Darstellung der Reifendruckeinstelleinrichtung 4 und der Reinigungseinrichtung 7 ist. Die Reifendruckeinstelleinrichtung 4 und die Reinigungseinrichtung 7 bedienen sich dabei teilweise der gleichen Bauelemente der Vorrichtung, wie beispielsweise dem Bedienfeld 11, der Rechnereinheit 9, dem Speicher 31, der Steuereinheit 12 und den Ventilen 13.

Die Reifendruckeinstelleinrichtung 4 arbeitet im Prinzip nach folgendem Schema. In der Rechnereinheit 9 werden den über das Bedienfeld 11 eingegebenen Reifentypen und dem Typ des Vorsatzgerätes 17 entsprechende Werte für die Masse bzw. die Massenschwerpunkte zugeordnet. Das Gleiche gilt für das abzuerntende Erntegut. Auch hier wird in der Rechnereinheit 9 ein entsprechender Wert der spezifischen Dichte der Körner zugeordnet und im Speicher 31 hinterlegt. Des weiteren erkennt die Rechnereinheit 9, mit den von den Sensoren 10.1 bis 10,4 erzeugten Signalen, die Füllstandshöhe 20 des Erntegutes 19 im Korntank 18 und berechnet die Maschinenmasse nach dem aus der EP 1 493 599 A2 bekannten Verfahren. Die Rechnereinheit 9 ist mit der Steuereinheit 12 der Reifendruckregelanlage 8 verbunden, die den Reifendruck der Radreifen 16 ändert. Die Änderung ergibt sich aufgrund der sich verändernden Maschinenmasse und ist abhängig von dem von der Rechnereinheit 9 ermittelten Wert. Der ständig neu ermittelte Wert sorgt dafür, dass der Reifendruck kontinuierlich an die sich ändernde Maschinenmasse angepasst wird. Zur Anpassung bzw. zur Erhöhung des Druckes in den Radreifen 16 erzeugt die Druckluftquelle 14 der Vorrichtung 3 des Versorgungssystems die benötigte Druckluft, die über die Zuleitungen 15 und den von der Steuereinheit 12 geregelten Ventilen 13 zu den Radreifen 16 gelangt. Die dabei von der Druckluftquelle 14 erzeugte überschüssige Druckluft wird von der Steuereinheit 12 der Reinigungseinrichtung 7 über die Ventile 13 und die Zuleitungen 22 den Reinigungsdüsen 23 zur Reinigung der Aggregate 5 und der Maschinenteilen 6 zugeführt,

Um die Belastung der Fahrbahn bzw, des Feldbodens zu verringern muss mit zunehmender Maschinenmasse der Luftdruck in den Radreifen 16 verringert werden, sodass durch die Absenkung des Reifendruckes die Aufstandsfläche der Radreifen 16 auf dem Feldboden vergrößert wird, wodurch die Flächenpressung des Feldbodens abnimmt Die Absenkung des Reifendruckes erfolgt wiederum durch die Erfassung der von den Sensoren 10.1 bis 10.4 erzeugten Signale und durch die in dem Speicher 31 hinterlegten Daten, wobei die Rechnereinheit 9 daraus einen Wert ermittelt, welcher der Steuereinheit 12 der Reinigungseinrichtung 7 zur Regelung der Ventile 13 zur Verfügung gestellt wird, Der aus den Radreifen 16 zu hohe Anteil der Druckluft wird über die Ventile 13 und die angeschlossenen Zuleitungen 22 den Reinigungsdüsen 23 zur Reinigung der Aggregate 5 und Maschinenteil 6 zugeführt

Alternativ kann, ohne den Druck in den Radreifen zu erhöhen oder zu erniedrigen, die Reinigungseinrichtung 7 über das im Fahrerstand der selbstfahrenden Landmaschine 1 angeordneten Bedienfeld 11 durch den Maschinenführer manuell betätigt werden, Das Bedienfeld 11 ist an der Vorrichtung 3, und somit an der Rechnereinheit 9, der Steuereinheit 12 und der integrierten Druckluftquelle 14 des Versorgungssystems angeschlossen, Die Druckluftquelle 14 stellt der Reinigungseinrichtung 7 Druckluft zur Verfugung, wobei die Ventile 13 von der Steuereinheit 12 der Reinigungseinrichtung 7 so geregelt werden, das die Druckluft über die Zuleitungen 22 an die Reinigungsdüsen 23 geführt wird.

Eine zusätzlich automatische Reinigung, über Reinigungsdüsen 23 an bestimmten Aggregaten 5 und/oder Maschinenteilen 6, kann durch Erfassung der Temperatur über Wärmesensoren 29.1 bis 29.4 erfolgen, die vorzugsweise an besonders Hitze gefährdeten Stellen im Motorraum oder in der Nähe der Abgasanlage angeordnet sind. Durch die Erfassung der von den Sensoren 29.1 bis 29.4 erzeugten Signale und durch die aus dem Speicher 31 hinterlegten Daten, ermittelt die Rechnereinheit 9 einen Wert, welcher der Steuereinheit 12 der Reinigungseinrichtung 7 zur Regelung der Ventile 13 zur Verfügung gestellt wird. Die Druckluftquelle 14 erzeugt daraufhin einen Luftdruck, der über die Ventile 13 und die Zuleitungen 22 den Reinigungsdüsen 23 an den Hitze gefährdeten Stellen zur Reinigung und Abkühlung zur Verfügung gestellt wird.

### Bezugszeichenliste:

| | | | |
|---|---|---|---|
| 1 | landwirtschaftliche Arbeitsmaschine | 31 | Speicher |
| 2 | Mähdrescher | 32 | Behälter |
| 3 | Vorrichtung | | |
| 4 | Reifendruckeinstelleinrichtung | | |
| 5 | Arbeitsaggregate | | |
| 6 | Maschinenteile | | |
| 7 | Reinigungseinrichtung | | |
| 8 | Reifendruckregefanlage | | |
| 9 | Rechnereinheit | | |
| 10.1-.4 | Sensoren | | |
| 11 | Bedienfeld | | |
| 12 | Steuereinheit | | |
| 13 | Ventile | | |
| 14 | Druckluftquelle | | |
| 15 | Zuleitungen | | |
| 16 | Radreifen | | |
| 17 | Vorsatzgerät | | |
| 18 | Korntank | | |
| 19 | Erntegut | | |
| 20 | Füllstandshöhe | | |
| 21 | Drucksensoren | | |
| 22 | Zuleitungen | | |
| 23 | Reinigungsdüsen | | |
| 24 | Adapter | | |
| 25 | Steckverbinder | | |
| 26 | Schlauchleitung | | |
| 27 | Antriebsmotor | | |
| 28 | Ansaugfilter | | |
| 29.1- .4 | Wännesensoren | | |
| 30 | Reinigungsmedium | | |

## Patentansprüche

1. Landwirtschaftliche Arbeitsmaschine, insbesondere Mähdrescher oder Feldhäcksler, mit einer Vielzahl von Arbeitsaggregaten zur Bearbeitung von Erntegutstrtimen und einer Vielzahl von Maschinenteilen und einer den gasgefüllten Reifen zugeordneten Reifendruckeinstelleinrichtung, wobei die Reifendruckeinstelleinrichtung (4) und eine ihr zugeordnete Druckquelle (14) über ein Leitungssystem (15, 22) gekoppelt sind, **dadurch gekennzeichnet, daß**
in das Leitungssystem (15, 22) eine Reinigungseinrichtung (7) integriert ist, wobei die Reinigungseinrichtung (7) die von der Druckquelle (14) bereitgestellte Druckluft zur Reinigung von Arbeitsaggregaten (5) und/oder Maschinenteilen (6) einsetzt.

2. Landwirtschaftüche Arbeitsmaschine nach Anspruch 1,
**dadurch gekennzeichnet,**
**dass** die Reifendruckeinstelleinrichtung (4) aus einer Reifendruckregefanlage (8), einer Rechnereinheit (8) mit angeschlossenen Sensoren (10) und einem Bedienfeld (11) gebildet wird, wobei die Reifendruckregelanlage (8) eine Steuereinheit (12) und Ventile (13) umfasst.

3. Landwirtschaftliche Arbeitsmaschine nach Anspruch 1,
**dadurch gekennzeichnet,**
**dass** die Reinigungseinrichtung (7) aus einer Rechnereinheit (9) mit angeschlossenen Wärmesensoren (29.1-29.4), einem Bedienfeld (11), einer Steuereinheit (12) und Ventilen (13) besteht.

4. Landwirtschaftliche Arbeitsmaschine nach einem der vorhergehenden Ansprüche,
**dadurch gekennzeichnet,**
**dass** die Reifendruckeinstelleinrichtung (4) und die Reinigungseinrichtung (7) von der gleichen Druckluftquelle (14) versorgt werden.

5. Landwirtschaftliche Arbeitsmaschine nach Anspruch 1 bis 2,
**dadurch gekennzeichnet,**
**dass** die Druckluftquelle (14) zur Steuerung des Reifendrucks eingesetzt wird.

6. Landwirtschaftliche Arbeitsmaschine nach Anspruch 1 bis 3,
**dadurch** gekenntzeichnet.
dass die Druckluftquelle (14) zur Reinigung der Arbeitsaggregate (5) und der Maschinenteile (6) eingesetzt wird.

7. Landwirtschaftliche Arbeitsmaschine nach einem der vorhergehenden Anspruche,
**dadurch gekennzeichnet,**
**dass** die Arbeitsaggregate (5) und die Maschinenteile (6) mit Reinigungsdüsen (23) ausgestattet sind.

8. Landwirtschaftliche Arbeitsmaschine nach einem der vorhergehenden Ansprüche,
**dadurch gekennzeichnet,**
**dass** die Druckluftquelle (14) über Ventile (13) und Zuleitungen (15) mit den Reinigungsdüsen (23) verbunden ist.

9. Landwirtschaftliche Arbeitsmaschine nach einem der vorhergehenden Ansprüche,
**dadurch gekennzeichnet,**
**dass** die Abgabe des Reinigungsmediums (30) an den Reinigungsdüsen (23) über die im Speicher (31) der Rechnereinheit (9) hinterlegten Daten, die der Steuereinheit (12) zum Regeln der Ventile (13) zugeführt werden, erfolgt.

10. Landwirtschaftliche Arbeitsmaschine nach einem der vorhergehenden Ansprüche,
**dadurch gekennzeichnet,**
**dass** an der Rechnereinheit (9) zur Regelung der Ventile (13) für die Reinigungsdüsen (23) Wärmesensoren (29) angeordnet sind.

11. Landwirtschaftliche Arbeitsmaschine nach einem der vorhergehenden Ansprüche,
**dadurch gekennzeichnet,**
**dass** die Wärmesensoren (29) an Hitze gefährdeten Stellen angeordnet sind.

## Claims

1. An agricultural working machine, in particular a combine harvester or forage harvester, comprising a plurality of working assemblies for processing crop material flows and a plurality of machine parts and a tyre pressure adjusting device associated with the gas-filled tyres, wherein the tyre pressure adjusting device (4) and a pressure source (14) associated therewith are coupled by way of a conduit system (15, 22), **characterised in that** a cleaning device (7) is integrated into the conduit system (15, 22), wherein the cleaning device (7) uses the compressed air provided by the pressure source (14) for cleaning working assemblies (5) and/or machine parts (6).

2. An agricultural working machine according to claim 1 **characterised in that** the tyre pressure adjusting device (4) is formed from a tyre pressure regulating installation (8), a computer unit (9) with connected sensors (10) and an operating panel (11), wherein the tyre pressure regulating installation (8) includes a control unit (12) and valves (13).

3. An agricultural working machine according to claim 1 **characterised in that** the cleaning device (7) comprises a computer unit (9) with connected heat sensors (29.1-29.4), an operating panel (11), a control unit (12) and valves (13).

4. An agricultural working machine according to one of the preceding claims **characterised in that** the tyre pressure adjusting device (4) and the cleaning device (7) are supplied by the same compressed air source (14).

5. An agricultural working machine according to claims 1 to 2 **characterised in that** the compressed air source (14) is used for controlling the tyre pressure.

6. An agricultural working machine according to claims 1 to 3 **characterised in that** the compressed air source (14) is used for cleaning the working assemblies (5) and the machine parts (6).

7. An agricultural working machine according to one of the preceding claims **characterised in that** the working assemblies (5) and the machine parts (6) are equipped with cleaning nozzles (23).

8. An agricultural working machine according to one of the preceding claims **characterised in that** the compressed air source (14) is connected to the cleaning nozzles (23) by way of valves (13) and feed conduits (15).

9. An agricultural working machine according to one of the preceding claims **characterised in that** the delivery of the cleaning medium (30) to the cleaning nozzles (23) is effected by way of the data which are stored in the memory (31) of the computer unit (9) and which are fed to the control unit (12) for regulating the valves (13).

10. An agricultural working machine according to one of the preceding claims **characterised in that** heat sensors (29) are arranged on the computer unit (9) for regulating the valves (13) for the cleaning nozzles (23).

11. An agricultural working machine according to one of the preceding claims **characterised in that** the heat sensors (29) are arranged at heat-endangered locations.

## Revendications

1. Machine agricole de travail, notamment moissonneuse-batteuse ou ramasseuse-hacheuse, comportant une pluralité d'équipements de travail pour traiter les flux de produit de récolte, une pluralité d'éléments de machine et un dispositif de réglage de la pression de pneus associé aux pneus remplis de gaz, ce dispositif (4) et une source de pression (14) qui lui est affectée étant accouplés par un système de conduites (15, 22), cette machine étant **caractérisée en ce qu'**au système de conduites (15, 22) est intégré un dispositif de nettoyage (7), ce dispositif (7) utilisant l'air comprimé mis à disposition par le source de pression (14), pour nettoyer des équipements de travail (5) et/ou des parties de machine (6).

2. Machine agricole de travail selon la revendication 1, **caractérisée en ce que** le dispositif de réglage de la pression des pneus (4) est composé d'une installation de régulation de la pression des pneus (8), d'une unité de calcul (8) avec des capteurs raccordés (10) et d'un tableau de commande (11), l'installation de régulation (8) comprenant une unité de commande (12) et des soupapes (13).

3. Machine agricole de travail selon la revendication 1, **caractérisée en ce que** le dispositif de nettoyage (7) est composé d'une unité de calcul (9) avec des capteurs thermiques (29.1 - 29.4) raccordés, d'un tableau de commande (11), d'une unité de commande (12) et de soupapes (13).

4. Machine agricole de travail selon une des revendications précédentes, **caractérisée en ce que** l'installation de réglage de la pression des pneus (4) et l'installation de nettoyage (7) sont alimentées par la même source d'air comprimé (14).

5. Machine agricole de travail selon les revendications 1 et 2, **caractérisée en ce que** la source d'air comprimé (14) est utilisée pour commander la pression des pneus.

6. Machine agricole de travail selon une des revendications 1 à 3, **caractérisée en ce que** la source d'air comprimé (14) est utilisée pour nettoyer les équipements de travail (5) et les parties de machine (6).

7. Machine agricole de travail selon une des revendications précédentes, **caractérisée en ce que** les équipements de travail (5) et les éléments de machine (6) sont dotés de buses de nettoyage (23).

8. Machine agricole de travail selon une des revendications précédentes, **caractérisée en ce que** la source d'air comprimé (14) est reliée aux buses de nettoyage (23) par des soupapes (13) et des conduites (15).

9. Machine agricole de travail selon une des revendications précédentes, **caractérisée en ce que** la délivrance de l'agent de nettoyage (30) aux buses de nettoyage (23) a lieu par l'intermédiaire des données enregistrées dans la mémoire (31) de l'unité de calcul (9) et qui sont envoyées à l'unité de commande (12) pour réguler les soupapes (13).

10. Machine agricole de travail selon une des revendications précédentes, **caractérisée en ce que** sur l'unité de calcul (9) sont montés, pour réguler les soupapes (13) alimentant les buses de nettoyage (23), des capteurs thermiques (29).

11. Machine agricole de travail selon une des revendications précédentes, **caractérisée en ce que** les capteurs thermiques (29) sont disposés aux points présentant des risques de chaleur.
